# FASCICULE DE BREVET EUROPEEN

(11) **EP 1 054 826 B1**
(45) Date de publication et mention de la délivrance du brevet: **09.01.2002**
(21) Numéro de dépôt: 99902625.5
(22) Date de dépôt: 09.02.1999
(51) Int. Cl.: B65G 47/84, B23Q 7/04, B29C 49/42

(54) **DISPOSITIF DE TRANSFERT POUR CORPS CREUX POSSEDANT UN GOULOT**
VORRICHTUNG ZUM TRANSPORTIEREN VON HOHLKÖRPERN, DIE EINEN HALS AUFWEISEN
TRANSFER DEVICE FOR HOLLOW BODY COMPRISING A NECK

(30) Priorité: 12.02.1998 FR 9801688
(43) Date de publication de la demande: 29.11.2000
(73) Titulaire: SIDEL, 76930 Octeville-sur-Mer (FR)
(72) Inventeur: EVRARD, Alain, F-76930 Octeville sur Mer (FR)
(74) Mandataire: Gorree, Jean-Michel
(86) Numéro de dépôt international: FR9900278
(87) Numéro de publication internationale: WO9941170

(56) Documents cités:
- EP-A- 0 216 261
- EP-A- 0 265 814
- WO-A-96/12582
- DE-A- 3 040 096
- FR-A- 2 479 077
- FR-A- 2 623 742
- US-A- 2 934 033

## Description

La présente invention concerne des perfectionnements apportés aux dispositifs de transfert, pour des corps creux comportant une extrémité ouverte formant goulot, comprenant au moins une pince propre à elle seule à saisir et supporter le corps creux par l'extérieur de son goulot et constituée de deux mâchoires articulées en synchronisme et des moyens moteurs pour commander l'ouverture et la fermeture des mâchoires et alimentés séquentiellement en synchronisme.

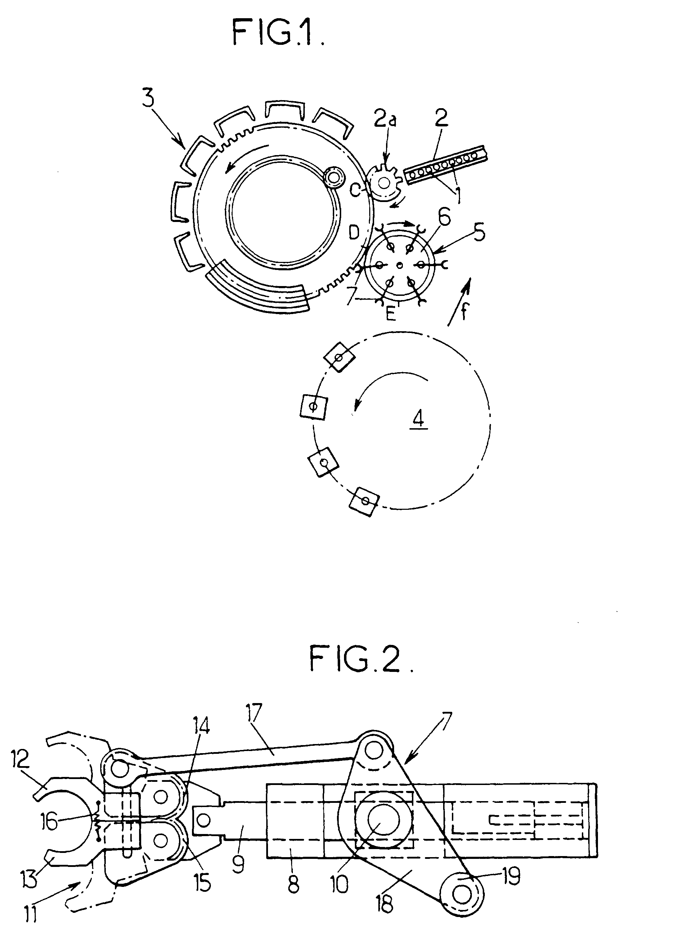

Un dispositif de transfert du type précité peut en particulier trouver application dans une installation de conditionnement thermique, puis de soufflage ou étirage-soufflage de corps creux ou récipients telle qu'illustrée schématiquement à la figure 1 annexée. Des préformes 1 en matière plastique, notamment en matière thermoplastique telle que le PET, obtenues par injection sont amenées d'un ou plusieurs conteneurs de stockage (non représentés) par une goulotte inclinée 2 suivie d'un dispositif de reprise 2a, en un point C d'un plateau tournant de support appartenant à un dispositif de conditionnement thermique 3 (four) dans lequel les préformes sont chauffées à la température nécessaire pour le soufflage ou l'étirage-soufflage. Les préformes chauffées sont extraites en D du plateau tournant par un dispositif de transfert 5, ici du type rotatif, qui les amène à l'entrée E d'un dispositif de soufflage ou d'étirage-soufflage 4, par exemple du type à jeu de moules tournant. Les récipients finalement obtenus (bouteilles, flacons) sont évacués selon la flèche f par un dispositif d'évacuation.

Pour ce qui concerne plus particulièrement le dispositif de transfert précité, il comprend un châssis fixe dans lequel tourillonne un arbre vertical rotatif entraîné en synchronisme avec un arbre d'entraînement du plateau tournant du poste de conditionnement thermique. Un plateau rotatif 6, solidaire de cet arbre, porte plusieurs (ici six) bras convoyeurs 7 régulièrement répartis sur la périphérie du plateau et s'étendant approximativement radialement (voir fig. 1).

Comme représenté de façon plus détaillée à la figure 2, chaque bras convoyeur 7 comporte un étrier 8 porté par le susdit arbre vertical et dans lequel coulisse une tige horizontale 9 à laquelle est associé un ressort de rappel (non visible) s'appuyant sur l'étrier 8. La tige 9 porte, entre les bras de l'étrier, une bague 10 fixée par exemple par une vis pointeau. La tige 9 porte à son extrémité extérieure une pince 11 à deux mâchoires articulées 12 et 13 qui engrènent l'une avec l'autre par des dentures respectives 14 et 15 portées par leurs bords adjacents respectifs entourant leurs pivots respectifs de rotation et qui sont rappelées l'une vers l'autre en position de fermeture par un ressort 16. Une biellette horizontale 17 est articulée, par une de ses extrémités, sur une des mâchoires, ici la mâchoire 12, en un point écarté du pivot de rotation de celle-ci et, par son autre extrémité, sur une extrémité d'un levier horizontal 18 tourillonnant dans sa zone centrale sur la partie supérieure de la bague 10. A son extrémité opposée, le levier 18 porte un galet fou 19 propre à coopérer avec des cames fixes pour assurer deux ouvertures successives de la pince 11 à l'encontre de l'effort de rappel du ressort 16, pour chaque tour de rotation du plateau 6.

Une description détaillée de l'agencement du dispositif de transfert 5 est exposée dans le document FR-A-2 479 077.

Dans une variante du dispositif précédent qui est également couramment utilisée en pratique, l'ouverture de la pince n'est pas commandée mécaniquement par un système de came, de galets et de leviers (le galet 19, le levier 18 et la biellette 17 n'existent pas), mais est obtenue simplement en forçant la pince, présentée fermée par le ressort 16, contre le goulot du corps creux.

Une structure de pince telle qu'il vient d'être écrit est largement utilisée dans la pratique et donne toute satisfaction pour le transfert de corps creux dont le goulot présente, extérieurement, une conformation facilitant la venue en prise correcte des mâchoires de la pince. Cette conformation particulière consiste en la présence de deux butées de retenue axiale situées de part et d'autre, respectivement inférieurement et supérieurement, de la zone externe du goulot destinée à être enserrée par les mâchoires.

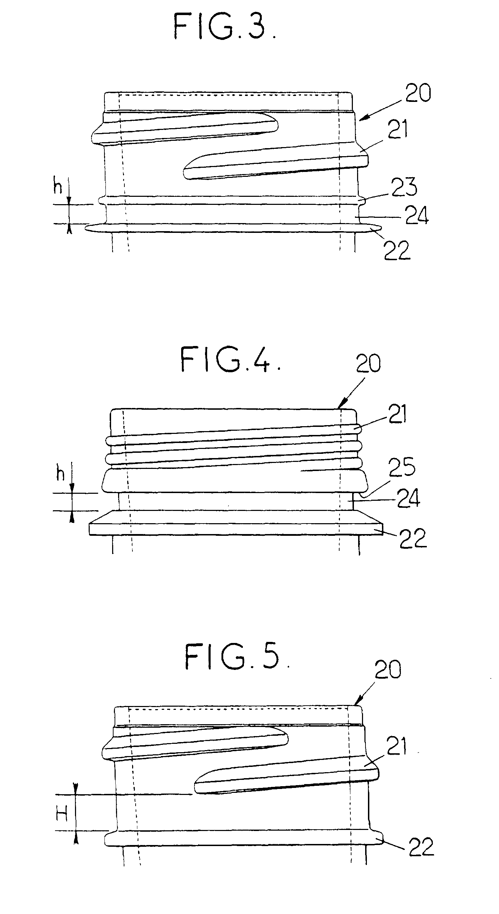

Comme représenté aux figures 3 et 4, deux types de conformation spécifiques sont actuellement couramment mises en oeuvre sur des goulots 20 de corps creux (préformes, bouteilles par exemple) qui peuvent présenter un filetage extérieur 21, d'un type quelconque, pour recevoir un bouchon vissable.

A la figure 3, outre une collerette annulaire 22 de grand diamètre traditionnellement prévue à la base du goulot pour le soutien du corps creux par un plateau de support à encoches, une seconde collerette 23 de plus faible diamètre est située au-dessus et à distance de la précédente et délimite avec celle-ci une portion cylindrique 24 du goulot qui présente une hauteur h suffisante pour recevoir les mâchoires de la pince 11. L'inconvénient présenté par cette conformation réside dans le supplément de matière nécessaire à la formation de la seconde collerette 23.

A la figure 4, la collerette 22 est surmontée d'une gorge annulaire 25 creusée dans l'épaisseur de la paroi du goulot, gorge 25 dont le fond constitue la susdite portion cylindrique 24 propre à être enserrée par les mâchoires de la pince. L'inconvénient présenté par cette conformation réside dans la résistance insuffisante du fond de la gorge lorsqu'on cherche à réduire l'épaisseur générale de la paroi du goulot dans un souci d'économie de matière première.

Dans un autre ordre d'idée, la présence d'une butée axiale supérieure (seconde collerette 23, haut de la gorge 24) permet d'assurer que le corps creux restera soutenu par la pince même si celle-ci n'enserre pas parfaitement la partie cylindrique 24 et ne serre pas positivement celle-ci. Autrement dit, il n'est pas nécessaire que les mâchoires de la pince exercent positivement un effort de serrage sur la partie 24, il suffit qu'elles entourent cette partie 24 en restant en-deçà du diamètre extérieur de la seconde collerette 23 ou du bord de la gorge 25. En outre, il en résulte que l'action de support des mâchoires de la pince restera efficace, dans les conditions précitées, même si l'effort de maintien des mâchoires rapprochées contre le goulot est fluctuant (par exemple en raison de phénomène de rebond des ressorts de rappel dans des machines à vitesse élevée).

Toutefois, les fabricants de récipients (bouteilles, flacons) souhaitent réduire au maximum la quantité de matière première nécessitée par chaque récipient. Il en est ainsi, en particulier, pour le goulot de chaque récipient, ce qui implique de donner à la paroi du goulot une épaisseur générale aussi réduite que possible (avec l'impossibilité corrélative de prévoir une gorge extérieure 25 qui affaiblirait la paroi) et/ou d'éliminer toute partie non strictement nécessaire à la fonction du goulot du récipient achevé (notamment suppression de la seconde collerette 23).

Au bout du compte, il est souhaitable d'aboutir à un goulot de forme extérieure épurée qui soit lisse (sensiblement cylindrique de révolution) sur toute la hauteur H entre la collerette de grand diamètre 22 et l'amorce inférieure du filetage 21, comme illustré à la figure 5. Toutefois dans ce cas, cette hauteur H excède sensiblement la hauteur h précitée, et donc l'épaisseur des mâchoires de la pince.

Or, dans le cas des machines à cadence élevée, soit l'usure des cames et/ou galets de commande, soit le phénomène de rebond des ressorts de rappel risque, même si les mâchoires sont réglées pour enserrer le goulot en position normale, de provoquer des vibrations des mâchoires autour du goulot s'accompagnant de relâchements de l'effort de serrage qui, bien qu'extrêmement brefs, peuvent être suffisants pour autoriser un glissement vertical du goulot entre les mâchoires. Ce phénomène de rebondissement risque donc d'entraîner un positionnement imprécis des goulots dans les pinces et finalement les corps creux risquent d'être mal présentés au dispositif situé en aval, avec le risque de disfonctionnement de l'ensemble de la machine que cela implique.

Une modification du réglage pour accroître l'effort de serrage des pinces n'est pas souhaitable car les mâchoires risquent alors, ne serait-ce que durant de brefs instants en raison du phénomène de rebond précité, serrer au contraire le goulot de façon excessive et d'entamer la matière, en endommageant le goulot, voire en le faisant éclater.

L'invention a donc pour but de remédier aux insuffisances et inconvénients précités et de proposer un aménagement perfectionné des dispositifs de transfert à pince afin qu'ils donnent toute satisfaction aux diverses exigences de la pratique, notamment pour ce qui concerne la possibilité de transfert de corps creux à goulot ne présentant extérieurement aucun relief propre à coopérer avec les mâchoires des pinces convoyeuses.

A ces fins, un dispositif de transfert tel que mentionné au préambule se caractérise en ce que, étant agencé conformément à l'invention, les moyens moteurs comprennent au moins un vérin fluidique, de préférence un vérin pneumatique, entraînant au moins une des mâchoires.

Dans un premier mode de réalisation possible, les moyens moteurs comprennent deux vérins fluidiques accouplés mécaniquement respectivement aux deux mâchoires ; dans un autre mode de réalisation structurellement plus simple et moins coûteux, les moyens moteurs comprennent un seul vérin fluidique, accouplé conjointement aux deux mâchoires ; dans un autre mode de réalisation constituant une variante du précédent, les moyens moteurs comprennent un seul vérin fluidique accouplé à une mâchoire et des moyens d'accouplement mécaniques sont interposés entre les deux mâchoires pour que le mouvement de celle entraînée par le vérin soit communiqué, inversé, à l'autre.

Dans un mode de réalisation simple, chaque vérin est un vérin pneumatique à simple effet.

Pour assurer la sécurité de fonctionnement du dispositif et éviter que la pince soit présentée fermée devant un corps creux lorsque la commande de la pince est défaillante, il est souhaitable de prévoir que chaque vérin soit actif dans le sens de la fermeture de la mâchoire. Pour la même raison, il est souhaitable qu'au moins un ressort de rappel soit actif dans le sens de l'ouverture de la mâchoire. Ledit ressort de rappel peut être accouplé entre les deux mâchoires et/ou être incorporé au vérin pour le ramener en position de repos.

Grâce aux dispositions qui précèdent, on est en mesure de concevoir un dispositif de transfert apte à saisir et à enserrer positivement une zone lisse d'un goulot d'un corps creux sans risque de variation de l'effort de serrage et donc sans risque de glissement vertical du goulot dans la pince convoyeuse, tout en étant assuré que l'effort de serrage ne soit pas excessif et reste dans une limite ne provoquant pas d'endommagement du goulot. Il en résulte qu'un tel dispositif est apte à manipuler des corps creux à structure simplifiée, ne présentant pas, sur la face externe du goulot, de relief spécifique propre à coopérer avec une pince convoyeuse : une telle structure simplifiée du goulot permet non seulement de supprimer la seconde collerette ou la gorge dont question plus haut, mais elle autorise en outre une réduction de l'épaisseur de la paroi. On recueille ainsi une possibilité d'économie sensible sur la quantité de matière première nécessaire à la formation du goulot, économie certes infime pour un goulot individuel, mais considérable sur l'ensemble d'une production de plusieurs millions de corps creux.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- la figure 6 est une vue de côté, partiellement en coupe, montrant une pince et son moteur fluidique ;
- les figures 7 et 8 sont des vues de dessus des organes illustrés à la figure 6, montrés dans deux positions fonctionnelles dans lesquelles la pince est respectivement fermée et ouverte ; et
- la figure 9 est une vue de dessus montrant une variante de réalisation d'une pince et de son moteur fluidique.

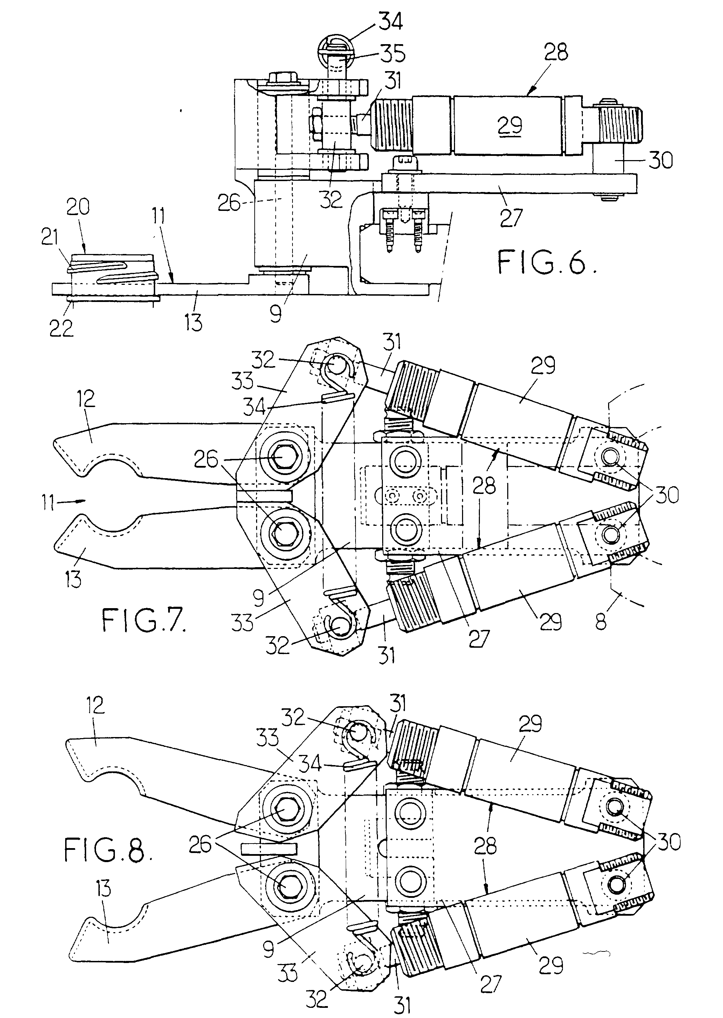

En se référant maintenant aux figures 6 et 7, sur lesquelles on a repris les mêmes références numériques pour désigner les organes analogues à ceux de la figure 2, les mâchoires 12 et 13 de la pince 11 sont supportées rotatives autour d'axes respectifs 26 à l'extrémité d'une tige 9 montée coulissante par rapport à un étrier 8 supporté par un plateau tournant (non montré). L'étrier 8 est animé, par rapport au plateau, d'un mouvement complexe permettant, en combinaison avec un coulissement relatif de la tige 9, à la pince 11 d'accompagner le goulot du corps creux à saisir durant la phase de préhension : on pourra se reporter au document précité FR-A-2 479 077 pour les détails de réalisation d'une telle structure.

Sur la tige 9 et en arrière des axes 26 est fixée une plaque de support ou embase 27 sur laquelle sont montés deux vérins fluidiques, notamment pneumatiques, 28 disposés symétriquement de part et d'autre de l'axe central de symétrie, en correspondance respectivement avec les deux mâchoires de la pince 11. Le corps 29 des vérins est monté pivotant sur l'embase 27 par l'intermédiaire d'un axe 30, tandis que l'extrémité de la tige 31 des vérins est accouplée à libre rotation, par un axe 32, à l'extrémité d'un bras 33 solidaire d'une mâchoire 12, 13 respective et s'étendant transversalement à celle-ci.

Dans l'exemple de réalisation illustré aux figures 6 et 7, les mâchoires 12, 13 sont disposées en-dessous de la tige 9 tandis que les bras 33 sont disposés au-dessus de la tige 9, à hauteur des vérins 28.

La solidarisation des mâchoires 12, 13 et des bras 33 respectifs peut, par exemple, être obtenue par clavetage des mâchoires et des bras sur les axes 32 respectifs.

En dehors des phases de préhension d'un goulot de corps creux pendant lesquelles la pince 11 est fermée positivement sous l'action d'extension des vérins pneumatiques 28 (fig. 7), la pince 11 demeure en position ouverte (fig. 8) le reste du temps par mesure de sécurité.

Pour simplifier la conception du dispositif, on utilise des vérins pneumatiques 28 qui sont du type à simple effet. Pour que la pince demeure alors ouverte même en cas de défaillance du système d'ouverture (défaillance du circuit pneumatique notamment), on prévoit des moyens de rappel qui peuvent comprendre un ressort de rappel 34 interposé entre les deux mâchoires, par exemple comme représenté sur les figures 6 à 8 entre les extrémités supérieures saillantes 35 des axes 32, et/ou des ressorts incorporés respectivement aux vérins (non visibles sur les figures 6 à 8) pour les ramener en position de repos ou position rétractée (par exemple ressort hélicoïdal entourant la tige du vérin entre l'extrémité du corps de vérin et le piston mobile). La redondance des moyens de rappel constitue une sécurité supplémentaire.

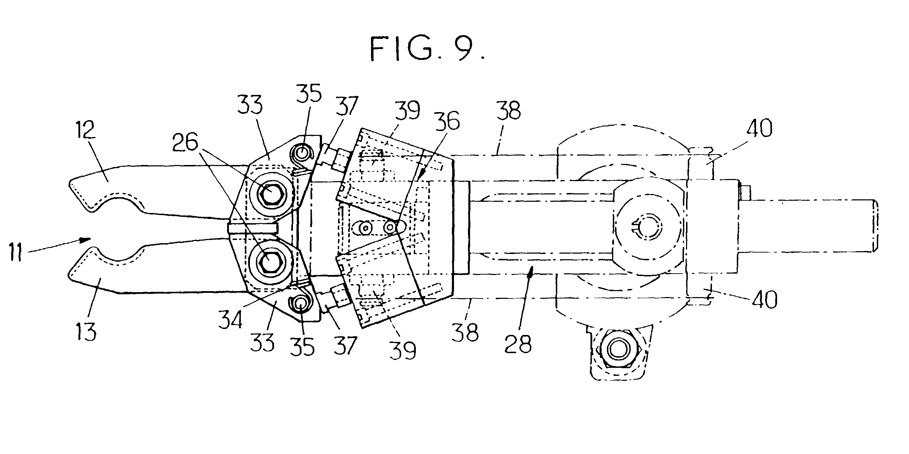

A la figure 9 est représentée une variante de réalisation ne faisant appel qu'à un unique vérin 28, toujours de préférence de type pneumatique et également avantageusement du type à simple effet, lequel vérin s'étend selon l'axe de symétrie de part et d'autre duquel sont situées les deux mâchoires 12 et 13 de la pince 11. De même que dans l'agencement des figures 6 à 8, les mâchoires 12, 13 sont montées pivotantes sur des axes 26 respectifs et présentent des bras en retour 33.

L'extrémité de la tige du vérin 28 est équipée d'une tête bifide 36 supportant deux poussoirs 37 en appui respectivement contre l'extrémité des bras 33 précités.

De même que dans l'exemple précédent, un ressort de rappel 34 est interposé entre des doigts saillants 35 des extrémités des bras 33, tandis que la tige du vérin est rappelée en position de repos (position rétractée) par deux ressorts 38, situés bilatéralement, entre des tétons respectifs 39 solidaires de la tête 36 et 40 solidaires du corps du vérin.

Bien entendu, certaines dispositions décrites pour l'exemple de réalisation de la figure 9 peuvent être utilisées dans l'exemple de réalisation des figures 6-8, ou inversement. Notamment, l'accouplement articulé des vérins 28 et des bras 33 illustré aux figures 6-8 peut être remplacé par une liaison par poussoir calquée sur celle équipant l'exemple de réalisation de la figure 9, en prévoyant alors que les deux vérins 28 sont supportés de façon fixe sur le bâti. De même les ressorts externes de rappel 38 montrés à la figure 9 peuvent être remplacés par un ressort de rappel unique incorporé dans le vérin.

On peut également faire appel à un vérin unique 28 accouplé à l'une quelconque des deux mâchoires 12, 13, avec interposition entre les deux mâchoires de moyens d'accouplement mécanique (par exemple secteurs dentés solidaires respectivement des mâchoires et engrenant l'un avec l'autre, comme illustré en 14, 15 à la fig. 2) propres à ce que le mouvement de la mâchoire entraînée directement par le vérin soit communiqué, inversé, à l'autre mâchoire.

## Revendications

1. Dispositif de transfert pour des corps creux comportant une extrémité ouverte formant goulot (20), comprenant au moins une pince (11) propre à elle seule à saisir et supporter le corps creux par l'extérieur de son goulot et constituée de deux mâchoires (12, 13) articulées en synchronisme et des moyens moteurs pour commander l'ouverture et la fermeture des mâchoires et alimentés séquentiellement en synchronisme, **caractérisé en ce que** les moyens moteurs comprennent au moins un vérin fluidique (28) entraînant au .moins une mâchoire (12, 13).

2. Dispositif selon la revendication 1, **caractérisé en ce que** les moyens moteurs comprennent deux vérins fluidiques (28) accouplés mécaniquement respectivement aux deux mâchoires (12, 13).

3. Dispositif selon la revendication 1, **caractérisé en ce que** les moyens moteurs comprennent un seul vérin fluidique (28) accouplé conjointement aux deux mâchoires.

4. Dispositif selon la revendication 1, **caractérisé en ce que** les moyens moteurs comprennent un seul vérin fluidique (28) accouplé à une mâchoire (12 ; 13) et des moyens d'accouplement mécaniques (14, 15) sont interposés entre les deux mâchoires (12, 13) pour que le mouvement de celle entraînée par le vérin soit communiqué, inversé, à l'autre.

5. Dispositif selon l'une quelconque des revendications précédentes, **caractérisé en ce que** chaque vérin (28) est un vérin pneumatique à simple effet.

6. Dispositif selon l'une quelconque des revendications précédentes, **caractérisé en ce que** chaque vérin (28) est actif dans le sens de la fermeture de la mâchoire.

7. Dispositif selon l'une quelconque des revendications précédentes, **caractérisé en ce qu'**un ressort de rappel (34, 38) est actif dans le sens de l'ouverture de la mâchoire.

8. Dispositif selon la revendication 7, **caractérisé en ce que** le ressort de rappel (34) est accouplé entre les deux mâchoires (12, 13).

9. Dispositif selon la revendication 7, **caractérisé en ce que** le ressort de rappel (38) est incorporé au vérin pour le ramener en position de repos.

## Patentansprüche

1. Transportvorrichtung für Hohlkörper mit einem einen Hals (20) bildenden offenen Endabschnitt, die zumindest eine von zwei synchron gelenkig verbundenen Backen (12, 13) gebildete Klemme (11) mit Eignung für diesen nur zum Tragen und Fassen des Hohlkörpers am Äußeren seines Halses und eine fortlaufend synchron gespeiste Antriebseinrichtung zum Steuern des Öffnens und Schließens der Backen aufweist, **dadurch gekennzeichnet, daß** die Antriebseinrichtung zumindest einen Fluidstellantrieb (28) aufweist, der zumindest eine Backe (12, 13) antreibt.

2. Vorrichtung nach Anspruch 1, **dadurch gekennzeichnet, daß** die Antriebseinrichtung zwei Fluidstellantriebe (28) aufweist, die bezüglich den zwei Backen (12, 13) mechanisch gekoppelt sind.

3. Vorrichtung nach Anspruch 1, **dadurch gekennzeichnet, daß** die Antriebseinrichtung einen einzigen Fluidstellantrieb (28) aufweist, der mit den zwei Backen gleichzeitig gekoppelt ist.

4. Vorrichtung nach Anspruch 1, **dadurch gekennzeichnet, daß** die Antriebseinrichtung einen einzigen Fluidstellantrieb (28) aufweist, der mit einer Backe (12; 13) gekoppelt ist, und zwischen die zwei Backen (12; 13) eine mechanische Kopplungseinrichtung (14, 15) zwischengefügt ist, damit die Bewegung von der durch den Stellantrieb angetriebenen Backe umgekehrt auf die andere Backe übertragen wird.

5. Vorrichtung nach einem der vorhergehenden Ansprüche, **dadurch gekennzeichnet, daß** jeder Stellantrieb (28) ein pneumatischer Stellantrieb mit einfacher Wirkung ist.

6. Vorrichtung nach einem der vorhergehenden Ansprüche, **dadurch gekennzeichnet, daß** jeder Stellantrieb (28) in Schließrichtung der Backe aktiv ist.

7. Vorrichtung nach einem der vorhergehenden Ansprüche, **dadurch gekennzeichnet, daß** eine Rückstellfeder (34, 38) in Öffnungsrichtung der Backe aktiv ist.

8. Vorrichtung nach Anspruch 7, **dadurch gekennzeichnet, daß** die Rückstellfeder (34) zwischen die zwei Backen (12, 13) gekoppelt ist.

9. Vorrichtung nach Anspruch 7, **dadurch gekennzeichnet, daß** die Rückstellfeder (38) in den Stellantrieb eingebaut ist, um diesen in die Ruheposition zurückzuführen.

## Claims

1. Transfer device for hollow bodies comprising an open end forming a neck (20), comprising at least one pincer (11) suitable alone to grip and support the hollow body by the outside of its neck and consisting of two synchronously articulated jaws (12, 13) and motor means to control the opening and closing of the jaws and actuated sequentially and synchronously,
**characterised in that** the motor means comprise at least one fluid actuator (28) driving at least one jaw (12, 13).

2. Device according to claim 1, **characterised in that** the motor means comprise two fluid actuators (28) coupled mechanically to the two jaws (12, 13) respectively.

3. Device according to claim 1, **characterised in that** the motor means comprise a single fluid actuator (28) coupled to both jaws together.

4. Device according to claim 1, **characterised in that** the motor means comprise a single fluid actuator (28) coupled to one jaw (12; 13) and mechanical coupling means (14, 15) are interposed between the two jaws (12, 13) so that the movement of the jaw driven by the actuator is communicated reversed to the other one.

5. Device according to any of the previous claims, **characterised in that** each actuator (28) is a single action pneumatic actuator.

6. Device according to any of the previous claims, **characterised in that** each actuator (28) acts in the jaw closing direction.

7. Device according to any of the previous claims, **characterised in that** a return spring (34, 38) acts in the jaw opening direction.

8. Device according to claim 7, **characterised in that** the return spring (34) is coupled between the two jaws (12, 13).

9. Device according to claim 7, **characterised in that** the return spring (38) is incorporated in the actuator so as to return this to the rest position thereof.
